# EUROPEAN PATENT SPECIFICATION

(11) **EP 4 131 126 B1**
(45) Date of publication and mention of the grant of the patent: **31.12.2025**
(21) Application number: 21779164.9
(22) Date of filing: 26.03.2021
(51) Int. Cl.: G06Q 50/04, G06Q 10/08

(54) **STANDARD INFORMATION MANAGEMENT DEVICE, STANDARD INFORMATION MANAGEMENT METHOD, AND PROGRAM**
VORRICHTUNG ZUR VERWALTUNG VON STANDARDINFORMATIONEN, VERFAHREN ZUR VERWALTUNG VON STANDARDINFORMATIONEN UND PROGRAMM
DISPOSITIF DE GESTION D'INFORMATIONS DE NORME, PROCÉDÉ DE GESTION D'INFORMATIONS DE NORME, ET PROGRAMME

(30) Priority: 31.03.2020 JP 2020064732
(43) Date of publication of application: 08.02.2023
(73) Proprietor: Mitsubishi Heavy Industries Thermal Systems, Ltd., Tokyo, 100-8332 (JP)
(72) Inventor: KIMURA Toshio, Tokyo 100-8332 (JP); KAWAMURA Naoya, Tokyo 100-8332 (JP); YOSHII Michitoshi, Tokyo 100-8332 (JP); SATO Hideaki, Tokyo 100-8332 (JP); MURAI Kyouko, Tokyo 100-8332 (JP)
(74) Representative: Studio Torta S.p.A.
(86) International application number: PCT/JP2021/012920
(87) International publication number: WO 2021/200676

(56) References cited:
- JP-A- 2003 016 113
- JP-A- 2015 099 503
- JP-A- 2015 099 503
- US-A1- 2007 271 299
- US-A1- 2009 313 036

## Description

### Technical Field

The present disclosure relates to a standard information management device, a standard information management method, and a program. This application claims priority based on Japanese Patent Application No. 2020-064732 filed in Japan on March 31, 2020.

### Background Art

In order to normally keep track of standard information and a compliance status of a product, it is necessary to manage the change of the standard information that is updated frequently, but the standard information varies for each destination and the amount of information is large, so that it is difficult to manage. In addition, in order to understand whether each country or region meets the standards required for sales, in addition to the standard information and the compliance status of the product, it is necessary to manage information on the destination of the product and the country or region where the product can be sold according to the standard, but it is difficult to manage because there are a wide variety of combinations of standard information and country or region information.

As a technique related to the above problem, PTL 1 describes a standard management system including standard storage means for storing a standard, standard transmission means for transmitting the standard stored in the standard storage means to a terminal in response to a request from the terminal, revision information receiving means for receiving revision information for the standard from the terminal, revision information registering means for storing the revised standard and the revision information created based on the revision information in the standard storage means, and standard providing means for transmitting at least the latest revised standard and revision information of the latest standard to the terminal of the standard user in response to a request from the terminal of the standard user.

### Citation List

### Patent Literature

[PTL 1] Japanese Unexamined Patent Application Publication No. 2005-228024
[PTL 2] US 2007/271299 A1
[PTL 3] US 2009/313036 A1
[PTL 4] JP 2015-099503 A

### Summary of Invention

The invention is defined in the appended claims.

### Summary of the Disclosure

### Technical Problem

When a standard is revised, it is necessary to promptly disseminate the revision within an organization and take all actions such as revision of related materials without omission.

The present disclosure is made in consideration of the above circumstances, and an object thereof is to provide a standard information management device, a standard information management method, and a program that quickly disseminate the revision within an organization, when a standard is revised.

### Solution to Problem

According to an aspect of the present disclosure, there is provided a standard information management device including an input unit that receives input of revision information indicating a revision content for a standard to be revised, an update unit that updates a database of the revision information for the standard to be revised based on the input revision information, and a notification unit
that notifies parties involved of a shipped product corresponding to the standard to be revised of the input revision information.

According to another aspect of the present disclosure, there is provided a standard information management method including a step of receiving input of revision information indicating a revision content for a standard to be revised, a step of updating a database of the revision information for the standard to be revised based on the input revision information, and a step of notifying parties involved of a shipped product corresponding to the standard to be revised of the input revision information.

According to still another aspect of the present disclosure, there is provided a program that causes a computer to execute a step of receiving input of revision information indicating a revision content for a standard to be revised, a step of updating a database of the revision information for the standard to be revised based on the input revision information, and a step of notifying parties involved of a shipped product corresponding to the standard to be revised of the input revision information.

### Advantageous Effects of Invention

According to the standard information management device, the standard information management method, and the program of the present disclosure, when a standard is revised, the revision is promptly disseminated within the organization.

### Brief Description of Drawings

Fig. 1 is a diagram illustrating a functional configuration of a standard information management device according to a first embodiment.
Fig. 2 is a diagram illustrating a function of a CPU of the standard information management device according to the first embodiment.
Fig. 3 is a diagram illustrating an example of a database data structure according to the first embodiment.
Fig. 4 is a diagram illustrating a processing flow of the standard information management device according to the first embodiment.
Fig. 5 is a diagram illustrating a content of the processing of the standard information management device according to the first embodiment.
Fig. 6 is a diagram illustrating a processing flow of the standard information management device according to the first embodiment.
Fig. 7 is a diagram illustrating a content of the processing of the standard information management device according to the first embodiment.
Fig. 8 is a diagram illustrating a processing flow of the standard information management device according to the first embodiment.
Fig. 9 is a diagram illustrating a content of the processing of the standard information management device according to the first embodiment.

### Description of Embodiments

### <First Embodiment>

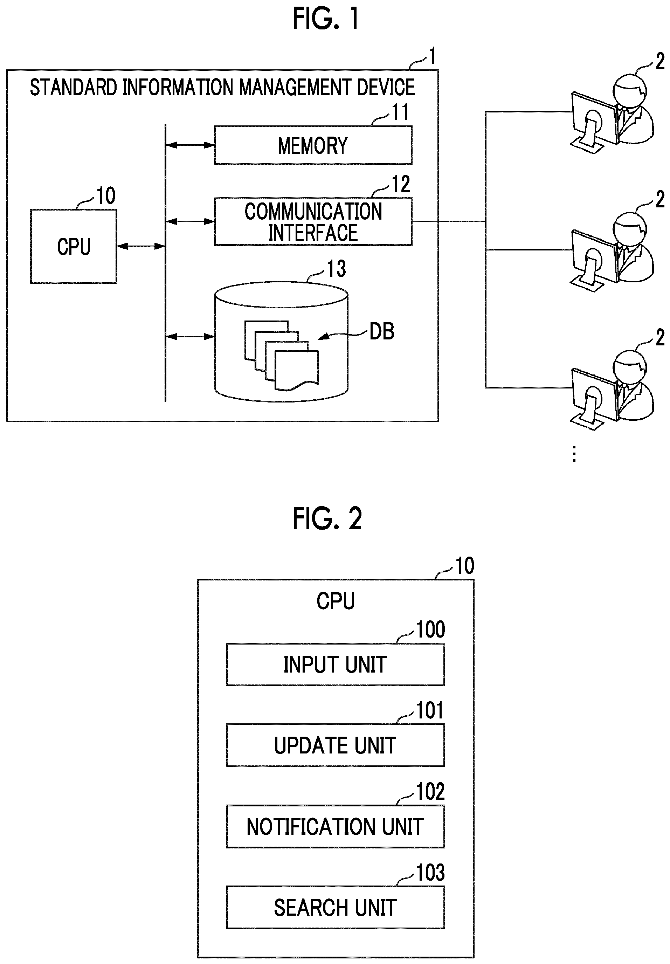

Hereinafter, a standard information management device according to the first embodiment will be described in detail with reference to Figs. 1 to 9.

### (Functional Configuration of Standard Information Management Device)

Fig. 1 is a diagram illustrating a functional configuration of the standard information management device according to the first embodiment.

The standard information management device 1 illustrated in Fig. 1 receives input of a search key from a user 2 through a communication network, and performs search processing for standard information registered in a database DB and various information associated therewith. In addition, the standard information management device 1 receives information such as an updated content of a newly updated standard and registers the information in the database DB.

In the present embodiment, a shipped product is described as an air conditioner, but the other embodiments are not limited thereto, and can be applied to all products for which standard management is required.

As illustrated in Fig. 1, the standard information management device 1 includes a CPU 10, a memory 11, a communication interface 12, and a recording medium 13.

The CPU 10 exerts various functions by operating according to a program prepared in advance. Details of the function of the CPU 10 will be described later.

The memory 11 is a so-called main storage device, and provides a storage area necessary for the operation of the CPU 10.

The communication interface 12 is an interface for establishing a connection with a wide area communication network (Internet or the like).

The recording medium 13 is a non-volatile large-capacity storage area such as a hard disk drive (HDD) or a solid state drive (SSD). The recording medium 13 records a database DB in which various information such as standard information, model information, and destination information are stored.

### (CPU Functional Configuration)

Fig. 2 is a diagram illustrating the function of the CPU of the standard information management device according to the first embodiment.

As illustrated in Fig. 2, the CPU 10 functions as an input unit 100, an update unit 101, a notification unit 102, and a search unit 103 by operating according to a program prepared in advance.

The input unit 100 receives input of revision information indicating the revision content of the standard to be revised. In addition, the input unit 100 receives input of model information indicating a new model and destination information indicating a new destination.

The update unit 101 updates a database of various information based on the input various information (revision information, model information, and destination information).

The notification unit 102 notifies the parties involved of the shipped product related to the input various information (revision information, model information, and destination information) of the input various information.

The search unit 103 receives the input of a search key from the user 2, searches the information related to the search key from the database DB, and outputs the information.

### (Data Structure of Database)

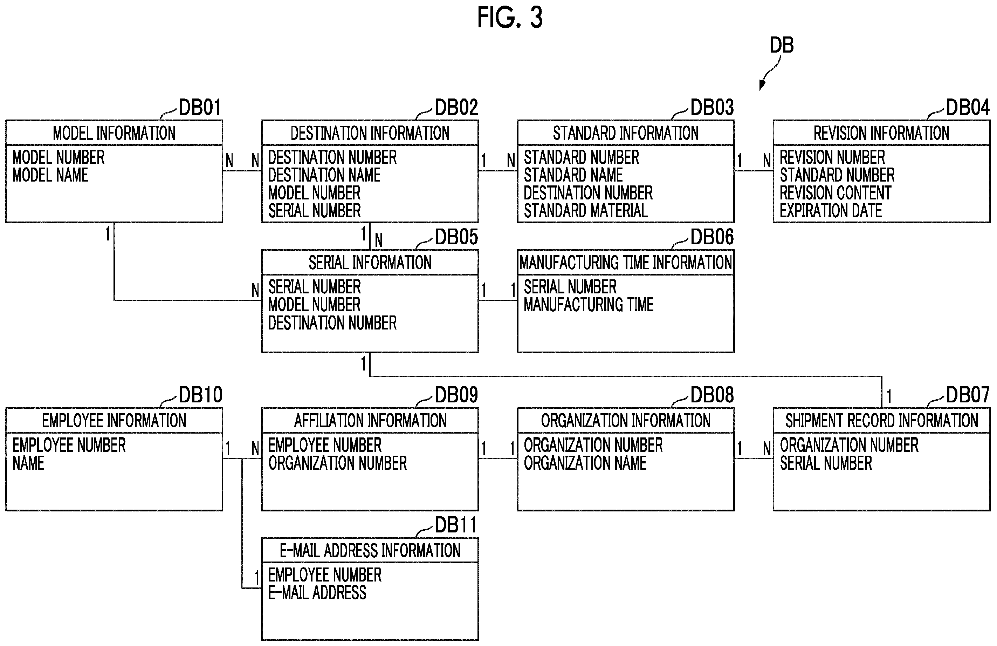

Fig. 3 is a diagram illustrating an example of the data structure of the database according to the first embodiment.

The database DB recorded on the recording medium 13 has, for example, a data structure as illustrated in Fig. 3.

Specifically, the database DB includes a model information database DB01, a destination information database DB02, a standard information database DB03, a revision information database DB04, a serial information database DB05, a manufacturing time information database DB06, a shipment record information database DB07, an organization information database DB08, an affiliation information database DB09, an employee information database DB10, and an e-mail address information database DB11.

In the model information database DB01, the "model number", which is the identification number of the model of the air conditioner, and the "model name" are registered in association with each other.

In other embodiments, it may be registered as a "series" which is positioned higher than the "model". In this case, the model information database DB01 may use information (series number) indicating the series instead of the "model number".

In the destination information database DB02, the "destination number", which is the identification number of the destination of the air conditioner, and the "destination name" are registered in association with each other. Furthermore, in the destination information database DB02, a "serial number", which is an individual identification number of the air conditioner shipped to the destination, and the "model number" of the model to which the air conditioner belongs are registered in association with each other.

In the standard information database DB03, the "standard number", which is the identification number of the standard, the "standard name", and the "standard material" are registered in association with each other. A "standard material" is a document file or the like illustrating details of the content of the standard. Furthermore, in the standard information database DB03, the "destination number" of the destination that adopts the standard is associated and registered.

In the revision information database DB04, the "revision number" which is the identification number of the revision, the "standard number" of the standard where the revision was made, and the "revision content" and "expiration date" of the revision are recorded in association with each other.

In the serial information database DB05, the "serial number" of each shipped air conditioner, the "model number" of the air conditioner, and the "destination number" indicating a shipping destination (destination) of the air conditioner are registered in association with each other.

In the manufacturing time information database DB06, the "serial number" of the air conditioner and the "manufacturing time" are recorded in association with each other.

In the shipment record information database DB07, the "serial number" of the shipped air conditioner and the "organization number" of the organization involved in the manufacture of the air conditioner (company design department, manufacturing department, and the like) are recorded in association with each other.

In the organization information database DB08, the "organization number", which is the identification number of the organization, and the "organization name" are recorded in association with each other.

In the affiliation information database DB09, the "organization number" of the organization and the "employee number", which is the identification number of the employee belonging to the organization, are recorded in association with each other.

In the employee information database DB10, the "employee number" of the employee and the "name" of the employee are recorded in association with each other.

In the e-mail address information database DB 11, the "employee number" of the employee and the "e-mail address" of the employee are recorded in association with each other.

### (First Processing Flow of Standard Information Management Device)

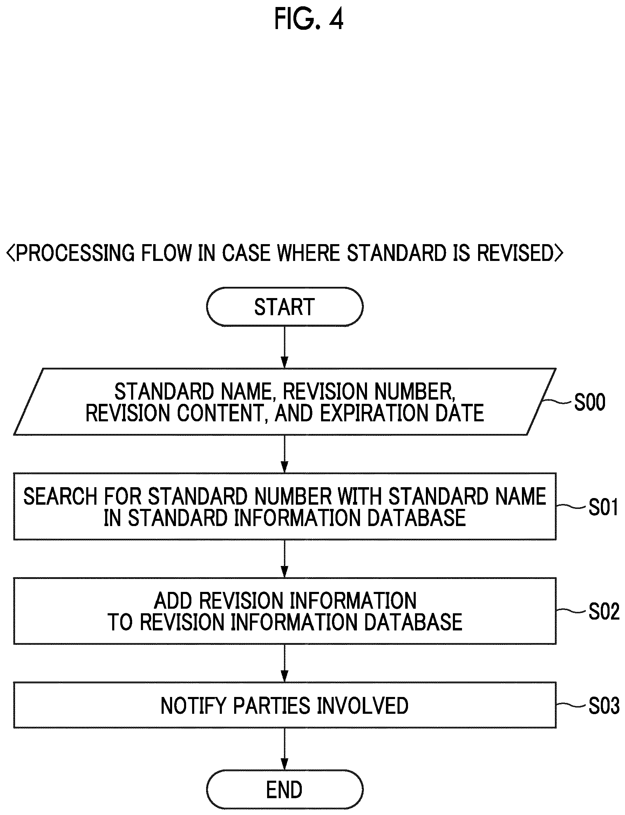

Fig. 4 is a diagram illustrating a processing flow of the standard information management device according to the first embodiment.

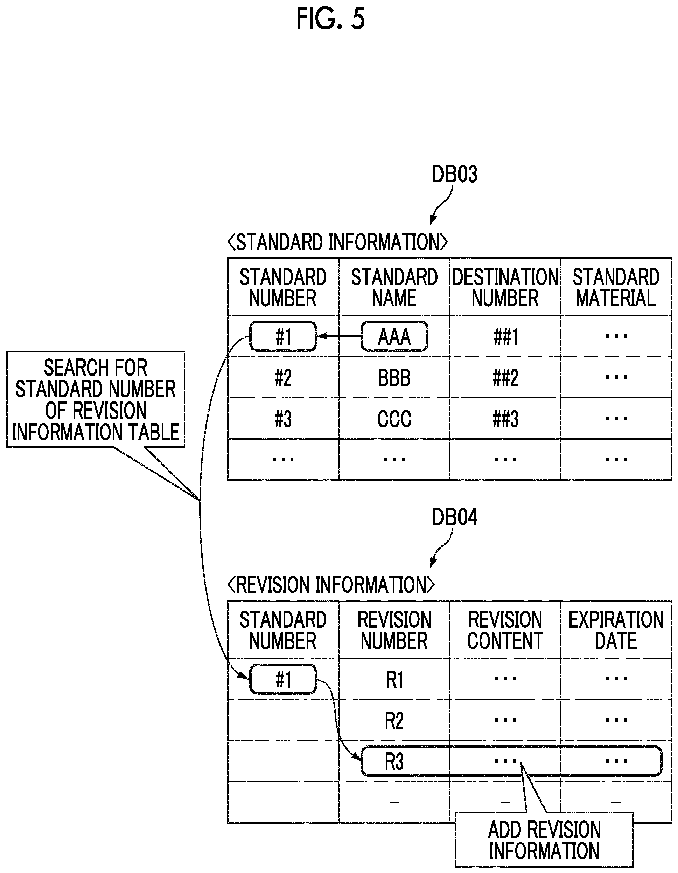

In addition, Fig. 5 is a diagram illustrating the content of the processing of the standard information management device according to the first embodiment. Hereinafter, a processing flow (first processing flow) in a case where the standard is revised will be described with reference to Figs. 4 and 5.

In a case where the standard is revised, the user 2 inputs the "standard name", "revision number", "revision content", and "expiration date" of the standard (standard to be revised) to the standard information management device 1. The input unit 100 of the standard information management device 1 receives the input of these information (step S00).

Next, the update unit 101 of the standard information management device 1 searches for the "standard number" in the standard information database DB03 using the "standard name" input in step S00 as a search key (step S01).

The update unit 101 adds the revision information ("revision number", "revision content", and "expiration date") input in step S00 in association with the "standard number" of the revision information database DB04 (step S02)

Fig. 5 illustrates a specific example of the processing of step S01 and step S02.

As illustrated in Fig. 5, the update unit 101 adds the "revision number", the "revision content" and the "expiration date" to the revision information database DB04 using the "standard number" associated with the "standard name" in the standard information database DB03 as a search key.

Returning to Fig. 4, the notification unit 102 of the standard information management device 1 simultaneously distributes an e-mail indicating the newly input revision information to the parties involved with the air conditioner corresponding to the standard to be revised (Step S03).

Processing of step S03 will be described with reference to Fig. 3.

Specifically, the notification unit 102 specifies the "destination number" associated with the "standard name" input in step S00 in the standard information database DB03. Subsequently, the notification unit 102 specifies the "serial number" associated with the "destination number" in the destination information database DB02. Furthermore, the notification unit 102 specifies the "organization number" associated with the "serial number" in the shipment record information database DB07. Furthermore, the notification unit 102 specifies the "employee number" associated with the "organization number" in the affiliation information database DB09. The notification unit 102 refers to the "e-mail address" associated with the "employee number" and automatically distributes an e-mail indicating new revision information ("revision number", "revision content", and "expiration date").

### (Second Processing Flow of Standard Information Management Device)

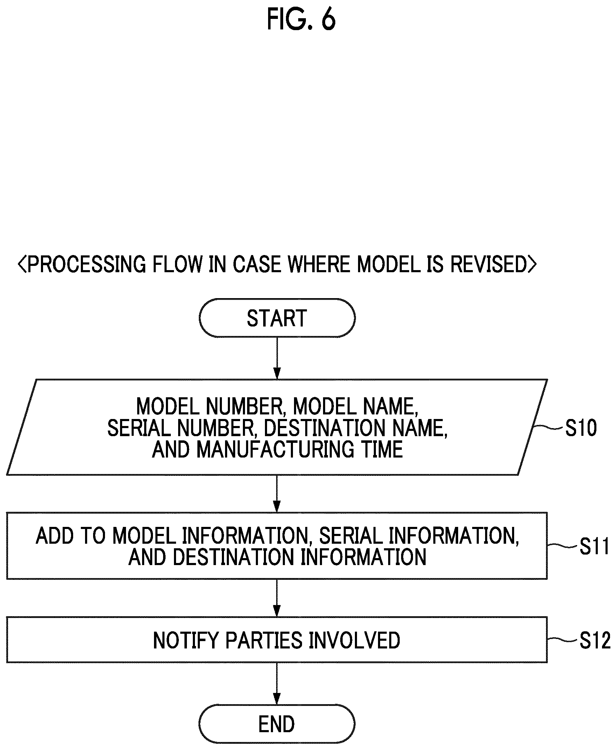

Fig. 6 is a diagram illustrating a processing flow of the standard information management device according to the first embodiment.

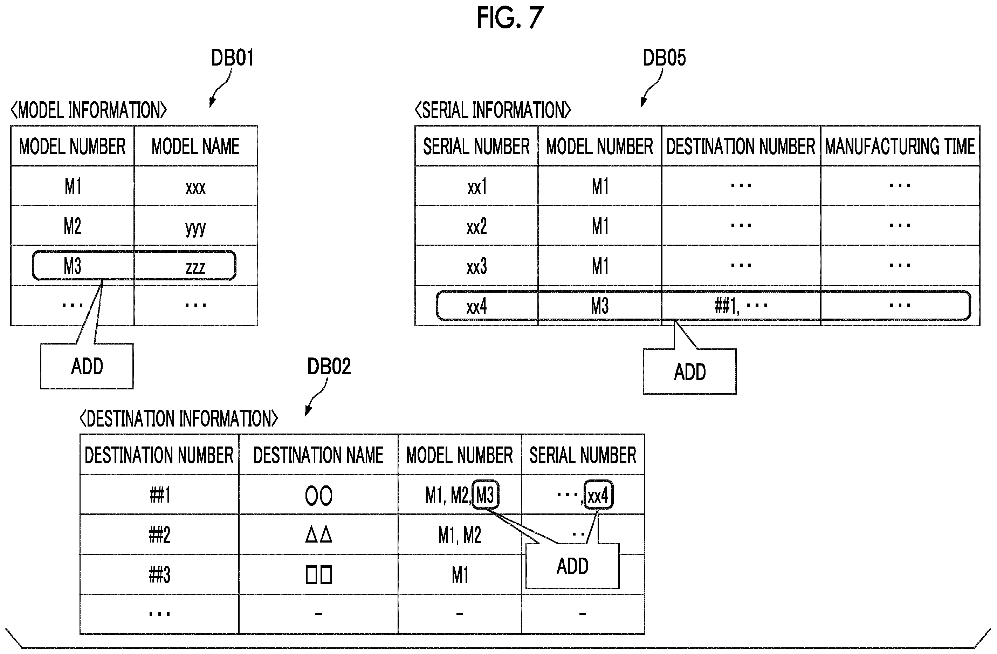

In addition, Fig. 7 is a diagram illustrating a content of the processing of the standard information management device according to the first embodiment. Hereinafter, a processing flow (second processing flow) in a case where the model of the air conditioner is updated (new model of the air conditioner is shipped) will be described with reference to Figs. 6 and 7.

In a case where the new model of air conditioner is shipped, the user 2 inputs the "model number" of the new model and "model name" thereof to the standard information management device 1. Furthermore, the user 2 inputs the "serial number" of the air conditioner belonging to the model, the "manufacturing time" thereof, and the "destination name" indicating the shipping destination of the air conditioner. The input unit 100 receives the input of these information (step S10).

Next, the update unit 101 adds the model information ("model number" and "model name" thereof) input in step S10 to the model information database DB01, the destination information database DB02, and the serial information database DB05 (step S11).

Fig. 7 illustrates a specific example of processing of step S11.

As illustrated in Fig. 7, the update unit 101 adds a new "model number" and "model name" input in step S10 to the model information database DB01.

In addition, the update unit 101 adds the new "serial number", "model number", "destination number", and "manufacturing time" input in step S10 to the serial information database DB05. In addition, the update unit 101 adds a new "serial number" and "model number" to the destination information database DB02 in association with the "destination name" input in step S10.

Returning to Fig. 6, subsequently, the notification unit 102 simultaneously distributes an e-mail indicating the newly input model information to the parties involved with the air conditioner belonging to the updated model (step S12).

Processing of step S12 will be described with reference to Fig. 3.

Specifically, the notification unit 102 specifies the "organization number" associated with the "serial number" input in step S10 in the shipment record information database DB07. Furthermore, the notification unit 102 specifies the "employee number" associated with the "organization number" in the affiliation information database DB09. The notification unit 102 refers to the "e-mail address" associated with the "employee number" and automatically distributes an e-mail indicating new model information ("model number" and "model name" thereof).

### (Third Processing Flow of Standard Information Management Device)

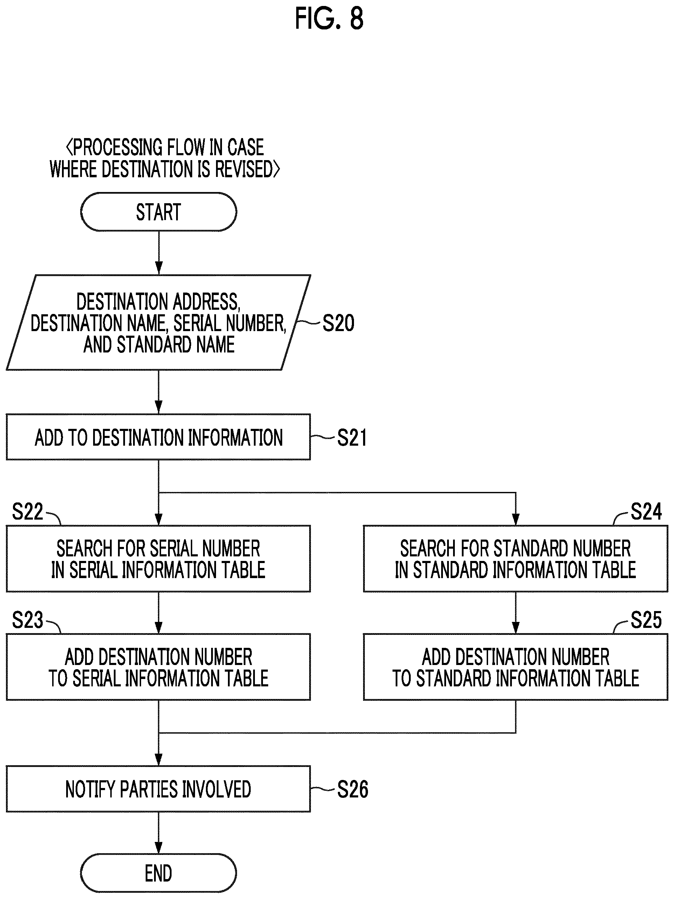

Fig. 8 is a diagram illustrating a processing flow of the standard information management device according to the first embodiment.

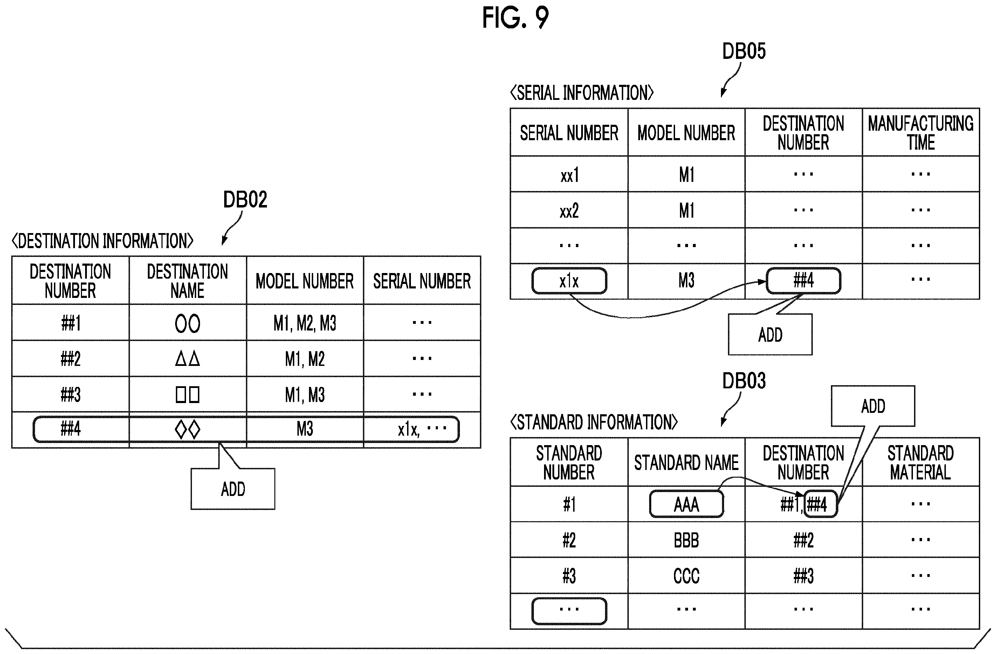

In addition, Fig. 9 is a diagram illustrating the content of the processing of the standard information management device according to the first embodiment. Hereinafter, the processing flow (third processing flow) in a case where the destination is updated (the air conditioner is shipped to the new destination) will be described with reference to Figs. 8 and 9.

In a case where the air conditioner is shipped to a new destination, the user 2 inputs the "destination number" and the "destination name" related to the new destination to the standard information management device 1. Furthermore, the user 2 inputs the "serial number" of the air conditioner shipped to the destination and the "standard name" of the standard to be complied with when shipping to the destination. The input unit 100 receives the input of these information (step S20).

Next, the update unit 101 adds the destination information ("destination number" and "destination name" thereof) input in step S20 and the "serial number" to the destination information database DB02 (step S21).

Subsequently, the update unit 101 searches for the "serial number" input in step S20 in the serial information database DB05 (step S22). The update unit 101 adds the "destination number" input in step S20 in association with the "serial number" of the serial information database DB05 (step S23).

In parallel with the processing of steps S22 to S23 described above, the update unit 101 searches for the "standard name" input in step S20 in the standard information database DB03 (step S24). The update unit 101 adds the "destination number" input in step S20 in association with the "standard name" of the standard information database DB03 (step S25).

Fig. 9 illustrates a specific example of processing of steps S21 to S25.

As illustrated in Fig. 9, the update unit 101 adds the new "destination number", "destination name", and "serial number" input in step S20 to the destination information database DB02. As for the "model number", the "model number" associated with the "serial number" may be automatically input in the serial information database DB05.

In addition, as illustrated in Fig. 9, the update unit 101 adds a new "destination number" to the serial information database DB05 in association with the new "serial number" input in step S20.

In addition, as illustrated in Fig. 9, the update unit 101 adds a new "destination number" to the standard information database DB03 in association with the "standard name" input in step S20.

Returning to Fig. 8, subsequently, the notification unit 102 simultaneously distributes an e-mail indicating the newly input destination information to the parties involved with the air conditioner shipped to the updated destination (step S12).

The function of the search unit 103 will be described.

The search unit 103 performs search processing according to the request of the user 2 by using the database DB constructed according to the above-described processing flow.

For example, user 2 wants to know the destination where a certain model of air conditioner is sold. In this case, the user 2 inputs the "model name" to the standard information management device 1. The search unit 103 refers to the model information database DB01 and the destination information database DB02, searches for the "destination name" corresponding to the input "model name", and outputs the "destination name".

In addition, the user 2 wants to know the standard required to be satisfied in a case where he or she wants to ship to a certain destination. In this case, the user 2 inputs the "destination name" to the standard information management device 1. The search unit 103 refers to the destination information database DB02, the standard information database DB03, and the revision information database DB04 and outputs the "standard name", "standard material", "revision content", and "expiration date" thereof of the standard complying with the destination indicated by the input "destination name".

### (Action and Effect)

As described above, according to the standard information management device 1 according to the first embodiment, in a case where the revision information of the standard is input, a notification of the newly input revision information is notified to the parties involved with the shipped product (air conditioner) corresponding to the standard to be revised. As a result, when the standard is revised, the revision is promptly disseminated within the organization.

In addition, in a case where the standard is revised, it is necessary to confirm whether or not the air conditioner model developed in the past conforms to the standard, and when the design or related materials need to be revised as necessary, the standard information management device 1 promptly notifies the parties involved, so that the above-described revision measures are promoted.

In addition, according to the standard information management device 1 according to the first embodiment, in a case where model information regarding a newly sold model is input, a notification of the newly input model information is notified to the parties involved with the shipped product (air conditioner) corresponding to the model. As a result, when the model information is updated, the update of the model information is promptly disseminated within the organization.

In addition, according to the standard information management device 1 according to the first embodiment, in a case where the destination information regarding a new shipping destination (destination) is input, a newly input model information is notified to the parties involved with the shipped product (air conditioner) shipped to the destination. As a result, when the destination information is updated, the update of the destination information is promptly disseminated within the organization.

### Reference Signs List

- 1:: standard information management device
- 10:: CPU
- 100:: input unit
- 101:: update unit
- 102:: notification unit
- 103:: search unit
- 11:: memory
- 12:: communication interface
- 13:: recording medium

## Claims

1. A standard information management device (1) comprising:
an input unit (100) that receives input of revision information indicating a revision content for a standard to be revised;
an update unit (101) that updates a database of the revision information for the standard to be revised based on the input revision information; and
a notification unit (102) that notifies parties involved of a shipped product corresponding to the standard to be revised of the input revision information,
wherein the parties involved of the shipped product are employees belonging to an organization involved in a manufacture of the shipped product corresponding to the standard to be revised.

2. The standard information management device (1) according to claim 1, wherein
the input unit (100) further receives input of model information indicating a new model,
the update unit (101) updates a database of the model information based on the input model information, and
the notification unit (102) notifies parties involved of a shipped product corresponding to the model indicated by the input model information of the input model information.

3. The standard information management device (1) according to claim 1 or 2, wherein
the input unit (100) further receives input of destination information indicating a new destination,
the update unit (101) updates a database of the destination information based on the input destination information, and
the notification unit (102) notifies parties involved of a shipped product shipped to the destination indicated by the input destination information of the input destination information.

4. A standard information management method comprising:
a step of receiving input of revision information indicating a revision content for a standard to be revised;
a step of updating a database of the revision information for the standard to be revised based on the input revision information; and
a step of notifying parties involved of a shipped product corresponding to the standard to be revised of the input revision information,
wherein the parties involved of the shipped product are employees belonging to an organization involved in a manufacture of the shipped product corresponding to the standard to be revised.

5. A program that causes a computer to execute
a step of receiving input of revision information indicating a revision content for a standard to be revised,
a step of updating a database of the revision information for the standard to be revised based on the input revision information, and
a step of notifying parties involved of a shipped product corresponding to the standard to be revised of the input revision information,
wherein the parties involved of the shipped product are employees belonging to an organization involved in a manufacture of the shipped product corresponding to the standard to be revised.

## Patentansprüche

1. Standardinformationsverwaltungsvorrichtung (1) umfassend:
eine Eingabeeinheit (100), die eine Eingabe von Revisionsinformationen empfängt, die einen Revisionsinhalt für einen zu revidierenden Standard angeben;
eine Aktualisierungseinheit (101), die eine Datenbank der Revisionsinformationen für den zu revidierenden Standard basierend auf den eingegebenen Revisionsinformationen aktualisiert; und
eine Benachrichtigungseinheit (102), die Parteien, die an einem versendeten Produkt beteiligt sind, das dem zu revidierenden Standard entspricht, über die eingegebenen Revisionsinformationen benachrichtigt,
wobei die an dem versendeten Produkt beteiligten Parteien Mitarbeiter einer Organisation sind, die an einer Herstellung des versendeten Produkts beteiligt ist, das dem zu revidierenden Standard entspricht.

2. Standardinformationsverwaltungsvorrichtung (1) nach Anspruch 1, wobei
die Eingabeeinheit (100) ferner eine Eingabe von Modellinformationen empfängt, die ein neues Modell angeben,
die Aktualisierungseinheit (101) eine Datenbank der Modellinformationen basierend auf den eingegebenen Modellinformationen aktualisiert, und
die Benachrichtigungseinheit (102) Parteien, die an einem versendeten Produkt beteiligt sind, das dem durch die eingegebenen Modellinformationen angegebenen Modell entspricht, über die eingegebenen Modellinformationen benachrichtigt.

3. Standardinformationsverwaltungsvorrichtung (1) nach Anspruch 1 oder 2, wobei
die Eingabeeinheit (100) ferner eine Eingabe von Zielinformationen empfängt, die ein neues Ziel angeben,
die Aktualisierungseinheit (101) eine Datenbank der Zielinformationen basierend auf den eingegebenen Zielinformationen aktualisiert, und
die Benachrichtigungseinheit (102) Parteien, die an einem versendeten Produkt beteiligt sind, das an das durch die eingegebenen Zielinformationen angegebene Ziel versendet wird, über die eingegebenen Zielinformationen benachrichtigt.

4. Standardinformationsverwaltungsverfahren umfassend:
einen Schritt des Empfangens einer Eingabe von Revisionsinformationen, die einen Revisionsinhalt für einen zu revidierenden Standard angeben;
einen Schritt des Aktualisierens einer Datenbank der Revisionsinformationen für den zu revidierenden Standard basierend auf den eingegebenen Revisionsinformationen; und
einen Schritt des Benachrichtigens von Parteien, die an einem versendeten Produkt beteiligt sind, das dem zu revidierenden Standard entspricht, über die eingegebenen Revisionsinformationen,
wobei die an dem versendeten Produkt beteiligten Parteien Mitarbeiter einer Organisation sind, die an einer Herstellung des versendeten Produkts beteiligt ist, das dem zu revidierenden Standard entspricht.

5. Programm, das einen Computer veranlasst, auszuführen
einen Schritt des Empfangens einer Eingabe von Revisionsinformationen, die einen Revisionsinhalt für einen zu revidierenden Standard angeben;
einen Schritt des Aktualisierens einer Datenbank der Revisionsinformationen für den zu revidierenden Standard basierend auf den eingegebenen Revisionsinformationen; und
einen Schritt des Benachrichtigens von Parteien, die an einem versendeten Produkt beteiligt sind, das dem zu revidierenden Standard entspricht, über die eingegebenen Revisionsinformationen,
wobei die an dem versendeten Produkt beteiligten Parteien Mitarbeiter einer Organisation sind, die an einer Herstellung des versendeten Produkts beteiligt ist, das dem zu revidierenden Standard entspricht.

## Revendications

1. Dispositif (1) de gestion d'une information de norme comprenant :
une unité d'entrée (100) qui reçoit une entrée de révision d'une information indiquant un contenu de révision pour une norme à réviser ;
une unité de mise à jour (101) qui met à jour une base de données de l'information de révision pour la norme à réviser sur la base de l'information de révision d'entrée ; et
une unité de notification (102) qui notifie l'information de révision d'entrée à des parties concernées par un produit expédié correspondant à la norme à réviser,
dans lequel les parties concernées par le produit expédié sont des salariés appartenant à une organisation impliquée dans une fabrication du produit expédié correspondant à la norme à réviser.

2. Dispositif (1) de gestion d'une information de norme selon la revendication 1, dans lequel
l'unité d'entrée (100) reçoit en outre une entrée d'information de modèle indiquant un nouveau modèle,
l'unité de mise à jour (101) met à jour une base de données de l'information de modèle sur la base de l'information de modèle d'entrée, et
l'unité de notification (102) notifie l'information de modèle d'entrée à des parties concernées par un produit expédié correspondant au modèle indiqué par l'information de modèle d'entrée.

3. Dispositif (1) de gestion d'une information de norme selon la revendication 1 ou 2, dans lequel
l'unité d'entrée (100) reçoit en outre une entrée d'information de destination indiquant une nouvelle destination,
l'unité de mise à jour (101) met à jour une base de données de l'information de destination sur la base de l'information de destination d'entrée, et
l'unité de notification (102) notifie l'information de destination d'entrée à des parties concernées par un produit expédié vers la destination indiquée par l'information de destination entrée.

4. Méthode de gestion d'une information de norme comprenant :
une étape de réception d'une entrée d'une information de révision indiquant un contenu de révision pour une norme à réviser ;
une étape de mise à jour d'une base de données de l'information de révision pour la norme à réviser sur la base de l'information de révision d'entrée ; et
une étape de notification de l'information de révision d'entrée à des parties concernées par un produit expédié correspondant à la norme à réviser,
dans lequel les parties concernées par le produit expédié sont des salariés appartenant à une organisation impliquée dans une fabrication du produit expédié correspondant à la norme à réviser.

5. Programme qui amène un ordinateur à exécuter une étape de réception d'une entrée d'une information de révision indiquant un contenu de révision pour une norme à réviser,
une étape de mise à jour d'une base de données de l'information de révision pour la norme à réviser sur la base de l'information de révision d'entrée, et
une étape de notification de l'information de révision d'entrée à des parties concernées par un produit expédié correspondant à la norme à réviser,
dans lequel les parties concernées par le produit expédié sont des salariés appartenant à une organisation impliquée dans une fabrication du produit expédié correspondant à la norme à réviser.
